# EUROPÄISCHE PATENTANMELDUNG

(11) **EP 4 541 634 A1**
(43) Veröffentlichungstag der Anmeldung: **23.04.2025**
(21) Anmeldenummer: 24202778.7
(22) Anmeldetag: 26.09.2024
(51) Int. Cl.: B60L 3/00

(54) **VERFAHREN ZUM STEUERN EINES LADENS ELEKTRISCHER ENERGIESPEICHER VON SCHIENENFAHRZEUGEN AN EINER LADESTATION**

(30) Priorität: 28.09.2023 DE 102023209508
(71) Anmelder: Siemens Mobility GmbH, 81739 München (DE)
(72) Erfinder: Probst, Sebastian, 90408 Nürnberg (DE); Scheibe, Hagen, 85521 Ottobrunn (DE)
(74) Vertreter: Siemens Patent Attorneys

(57) **Zusammenfassung**

Die Erfindung betrifft ein Verfahren zum Steuern eines Ladens elektrischer Energiespeicher (ES) von Schienenfahrzeugen (SF1,SF2,SF3) an einer Ladestation (LS), wobei die Ladestation (LS) ausgestaltet ist, dass an ihr mehrere Schienenfahrzeuge (SF1,SF2,SF3) parallel ladbar sind. Das Verfahren ist dadurch gekennzeichnet, dass von dem Schienenfahrzeug (SF1,SF2,SF3) zumindest ein aktueller Ladezustand (lz) des Energiespeichers (ES) bestimmt wird, von dem Schienenfahrzeug (SF1,SF2,SF3) zumindest Informationen bezüglich einer Identifikation und des bestimmten Ladezustands (lz) zu einer der Ladestation (LS) zugeordneten zentralen Ladeplanungseinrichtung (LPE) übertragen werden, von der Ladeplanungseinrichtung (LPE) zumindest abhängig von einer maximalen Gesamt-Ladeleistung (GLL) der Ladestation (LS), einem dem Schienenfahrzeug (SF1,SF2,SF3) zugeordneten Umlaufplan (ULP) und einem Ziel-Ladezustand ein fahrzeugindividueller Ladeplan (lp1,lp2,lp3) bestimmt und zu dem Schienenfahrzeug (SF1,SF2,SF3) übertragen wird, und von dem Schienenfahrzeug (SF1,SF2,SF3) der Energiespeicher (ES) abhängig von dem empfangenen Ladeplan (lp1,lp2,lp3) an der Ladestation (LS) geladen wird.

## Beschreibung

Die Erfindung betrifft ein Verfahren zum Steuern eines Ladens elektrischer Energiespeicher von Schienenfahrzeugen an einer Ladestation, ein Schienenfahrzeug sowie eine Ladeplanungseinrichtung.

Im Zuge des vermehrten Ersatzes mittels Brennkraftmaschinen betriebener Schienenfahrzeuge einer Schienenfahrzeugflotte eines Flottenbetreibers durch solche mit zumindest einem elektrischen Energiespeicher, beispielsweise einer Traktionsbatterie, entsteht ein entsprechender Bedarf, diese Energiespeicher an bestimmten Orten des von der Flotte befahrenen Streckennetzes mit elektrischer Energie laden zu können. Dies kann insbesondere während des Befahrens elektrifizierter Streckenabschnitte durch die Schienenfahrzeuge erfolgen. Zusätzlich sind jedoch oftmals spezielle Ladestationen erforderlich, an denen die Schienenfahrzeuge während eines Halts oder während eines Abstellbetriebs geladen werden können. Üblicherweise werden solche Ladestationen an Endhaltestellen und/oder Depots des befahrenen Streckennetzes vorgesehen, an denen beispielsweise über Nacht mehrere Schienenfahrzeuge abgestellt werden. Dieser üblicherweise lange Zeitraum der Abstellung wird entsprechend für das Laden der Energiespeicher genutzt.

Die Leistung einer Ladestation und/oder der mit dieser verbundenen Energieversorgungsinfrastruktur ist häufig nicht ausreichend, um parallel mehrere oder alle mit dieser verbundenen Schienenfahrzeuge mit einer maximalen Ladeleistung laden zu können. Daher ist es erforderlich, die verfügbare maximale Gesamt-Ladeleistung derart auf die Schienenfahrzeuge zu verteilen, dass die Ladestation bzw. die diese speisende Infrastruktur nicht überlastet wird.

Vor diesem Hintergrund ist die Aufgabe der Erfindung, ein Verfahren anzugeben, welches eine geeignete Verteilung einer Gesamt-Ladeleistung einer Ladestation auf mehrere mit dieser verbundene Schienenfahrzeuge ermöglicht. Diese Aufgabe wird durch die jeweiligen Merkmale der unabhängigen Patentansprüche gelöst. Weiterbildungen sind in abhängigen Patentansprüchen angegeben.

Das erfindungsgemäße Verfahren zum Steuern eines Ladens elektrischer Energiespeicher von Schienenfahrzeugen an einer Ladestation, wobei die Ladestation ausgestaltet ist, dass an ihr mehrere Schienenfahrzeuge parallel ladbar sind, ist dadurch gekennzeichnet, dass von dem Schienenfahrzeug zumindest ein aktueller Ladezustand des Energiespeichers bestimmt wird, von dem Schienenfahrzeug zumindest Informationen bezüglich einer Identifikation und des bestimmten Ladezustands zu einer der Ladestation zugeordneten zentralen Ladeplanungseinrichtung übertragen werden, von der Ladeplanungseinrichtung zumindest abhängig von einer maximalen Gesamt-Ladeleistung der Ladestation, einem dem Schienenfahrzeug zugeordneten Umlaufplan und einem Ziel-Ladezustand ein fahrzeugindividueller Ladeplan bestimmt und zu dem Schienenfahrzeug übertragen wird, und von dem Schienenfahrzeug der Energiespeicher abhängig von dem empfangenen Ladeplan an der Ladestation geladen wird.

Jedes Schienenfahrzeug bzw. zumindest die Schienenfahrzeuge der Flotte, deren Energiespeicher mittels der Ladestation geladen werden sollen, sind mit der erfindungsgemäßen zentralen Ladeplanungseinrichtung für den Austausch der Informationen und des Ladeplans kommunikativ verbunden. Die Kommunikationsverbindung besteht dabei beispielsweise über eine Funkschnittstelle, wobei sowohl die Schienenfahrzeuge als auch die Ladeplanungseinrichtung entsprechende Sende- und Empfangseinrichtungen aufweisen bzw. mit solchen verbunden sind.

Die Ladeplanungseinrichtung kann einer einzigen Ladestation zugeordnet sein, vorzugsweise ist diese jedoch mehreren an dem Streckennetz angeordneten Ladestationen zugeordnet. Die Ladeplanungseinrichtung kann als eine gesonderte Einrichtung, welche mit anderen Einrichtungen eines Flottenverwaltungssystems des Flottenbetreibers verbunden ist, alternativ als eine weitere Funktion eines solchen Verwaltungssystems ausgestaltet sein.

Die Ladestation wandelt eine von der Energieversorgungsinfrastruktur bereitgestellte elektrische Energie beispielsweise in eine für das Laden der Energiespeicher geeignete Spannung, vorzugsweise jedoch in eine typische Spannung eines elektrifizierten Streckennetzes. Eine solche typische Spannung ist eine Einphasen-Wechselspannung von 25 kV, 50 Hz, oder 15 kV, 16.7 Hz, oder eine Gleichspannung von 3 kV oder 1.5 kV. Die Schienenfahrzeuge weisen üblicherweise an zumindest eine dieser Spannungen angepasste bzw. anpassbare Antriebsstromrichter bereits auf, sodass über diese die Energiespeicher an der Ladestation in gleicher Weise geladen werden können, wie es während des Befahrens eines elektrifizierten Streckenabschnitts erfolgt. Die Ladestation umfasst ferner eine Mehrzahl von Ladeleitungen oder Ladeschienen, welche entsprechend einem Oberleitungsabschnitt bzw. Stromschienenabschnitt ausgestaltet sind. Diese Ladeleitungen bzw. Ladeschienen werden beispielsweise entlang von Abstellgleisen angeordnet, sodass sich die Schienenfahrzeuge während des Abstellbetriebs mit diesen elektrisch verbinden können. Eine Zuweisung von Ladeleistungen zu bestimmten Ladeleitungen bzw. Ladeschienen durch die Ladestation selbst ist nicht vorgesehen, vielmehr dient die Ladestation ausschließlich der Bereitstellung elektrischer Energie.

Die den Schienenfahrzeugen übergeordnete Ladeplanungseinrichtung ermöglicht eine fahrzeugübergreifende bzw. Flotten- oder Teil-Flotten-spezifische Planung der Verteilung der Ladeleistung, sodass insbesondere eine mögliche Überschreitung der maximalen Gesamt-Ladeleistung der Ladestation, wie sie bei einem ansonsten ungeplanten Laden durch die Schienenfahrzeuge nachteilig auftreten kann, vorteilhaft vermieden wird. Der von der Ladeplanungseinrichtung bestimmte fahrzeugindividuelle Ladeplan dient dabei der Umsetzung dieser Planung durch die Schienenfahrzeuge.

Die Bestimmung des fahrzeugindividuellen Ladeplans basiert insbesondere auf den von dem Schienenfahrzeug der Ladeplanungseinrichtung bereitgestellten Informationen. Diese Informationen umfassen zumindest eine Identifikation des Schienenfahrzeugs, beispielsweise eine eindeutige Fahrzeugnummer oder Kennung, sowie gegebenenfalls ergänzende Informationen bezüglich des Fahrzeugtyps wie beispielsweise die Baureihe. Mittels der Identifikations-Information kann die Ladeplanungseinrichtung, beispielsweise in Verbindung mit einer weiteren Einrichtung des Flottenverwaltungssystems, einen aktuellen Umlaufplan des identifizierten Schienenfahrzeugs bestimmen. Aus einem solchen Umlaufplan geht insbesondere hervor, zu welchem Zeitpunkt das Schienenfahrzeug wieder in Betrieb genommen wird, woraus die Ladeplanungseinrichtung wiederum ableiten kann, zu welchem Zeitpunkt der Energiespeicher des Schienenfahrzeugs einen vorgegebenen Ziel-Ladezustand bzw. mindestens den Ziel-Ladezustand aufweisen muss. Aus der Information über den aktuellen Ladezustand des Energiespeichers und dem Ziel-Ladezustand bestimmt die Ladeplanungseinrichtung eine zu ladende Energiemenge, die in der hierfür zur Verfügung stehende Zeit von dem Schienenfahrzeug geladen werden muss. Der Umlaufplan kann beispielsweise temporäre Änderungen von für das Schienenfahrzeug relevanten Fahrplänen umfassen, welche von der Ladeplanungseinrichtung bei der Bestimmung des Ladeplans gegebenenfalls berücksichtigt werden können.

Nach einer Weiterbildung wird von der Ladeplanungseinrichtung mittels des Ladeplans zumindest ein Zeitraum und eine während des Zeitraums zugelassene maximale Ladeleistung bestimmt.

Der fahrzeugindividuelle Ladeplan definiert somit zumindest einen Zeitraum, in dem das diesen empfangende Schienenfahrzeug mit einer bestimmten maximalen Ladeleistung seinen Energiespeicher an der Ladestation laden kann. Der Zeitraum kann dabei durch Angabe eines Start-Zeitpunkts sowie einer Länge des Zeitraums, alternativ durch Angabe von Startund End-Zeitpunkten definiert sein. Die Bestimmung fahrzeugindividueller Zeiträume dient beispielsweise dazu, die seitens der Ladestation zur Verfügung gestellte begrenzte Ladeleistung zeitversetzt auf mehrere Schienenfahrzeuge zu verteilen, wobei dies wiederum unter Berücksichtigung des jeweiligen Umlaufplans erfolgt. Beispielsweise können die Zeiträume für mehrere mit der Ladestation verbundene Schienenfahrzeuge derart bestimmt werden, dass jeweils nur eines der mehreren Schienenfahrzeuge seinen Energiespeicher mit der vorgegebenen maximalen Ladeleistung lädt, während die weiteren Schienenfahrzeuge nur eine geringere Ladeleistung von der Ladestation beziehen dürfen, welche beispielsweise ausreichend für den Betrieb von Hilfsbetrieben des Schienenfahrzeugs ist. Diese geringere Ladeleistung kann ergänzend ebenfalls in dem Ladeplan definiert sein. Eine Reihenfolge der Zeiträume kann von der Ladeplanungseinrichtung abhängig von dem jeweiligen aktuellen Ladezustand der Schienenfahrzeuge bestimmt werden, wobei beispielsweise dem Schienenfahrzeug mit dem höchsten aktuellen Ladezustand ein erster Zeitraum, dem Schienenfahrzeug mit dem nächstniedrigeren Ladezustand ein nachfolgender zweiter Zeitraum usw. zugewiesen wird. Ein Ziel des zeitlich disjunkten Ladens kann dabei sein, die Energiespeicher aller mit der Ladestation verbundener Schienenfahrzeuge innerhalb eines bestimmten Zeitraums auf einen bestimmten minimalen Ladezustand zu laden. Dieses kann beispielsweise derart bemessen sein, dass das jeweilige Schienenfahrzeug mit diesem den Betrieb entsprechend dem Umlaufplan beginnen bzw. fortsetzen kann.

Nach einer weiteren Weiterbildung wird von dem Schienenfahrzeug ergänzend eine aktuelle Position bestimmt und werden Informationen bezüglich der bestimmten aktuellen Position zu der Ladeplanungseinrichtung übertragen, und/oder wird von dem Schienenfahrzeug und/oder der Ladeplanungseinrichtung mittels der aktuellen Position bestimmt, ob sich das Schienenfahrzeug in einem geographischen Bereich der Ladestation befindet.

Die Bestimmung des Ladeplans durch die Ladeplanungseinrichtung erfolgt somit ergänzend abhängig davon, ob sich das Schienenfahrzeug an der Ladestation befindet oder nicht. Hierfür kann der Ladestation beispielsweise ein bestimmtes geographisches Gebiet zugeordnet sein. Sobald das Schienenfahrzeug durch Vergleich seiner aktuellen Position mit diesem Gebiet, welches beispielsweise in einem Datenspeicher des Schienenfahrzeugs hinterlegt sein kann, feststellt, dass es sich an bzw. im Bereich der Ladestation befindet, überträgt dieses die Identifikations- und Ladezustands-Informationen zu der Ladeplanungseinrichtung. Alternativ oder ergänzend kann auch von der Ladeplanungseinrichtung anhand der Informationen bezüglich der aktuellen Position verifiziert werden, ob sich das Schienenfahrzeug an bzw. im Bereich der Ladestation befindet. Die aktuelle Position des Schienenfahrzeugs kann beispielsweise mittels eines oder mehrerer bekannter satellitengestützter Lokalisierungssysteme bestimmt werden. Alternativ oder zusätzlich kann dies mittels spezieller Signalisierungsmittel erfolgen. Solche Signalisierungsmittel, beispielsweise eine im Gleis angeordnete Balise oder im Umfeld des Gleises angeordnete spezielle Funksender, sind beispielsweise an einer Grenze des Gebiets bzw. geographischen Bereichs der Ladestation angeordnet, sodass das Schienenfahrzeug bei Überfahren der Balise bzw. Empfangen spezieller Funksignale die Einfahrt in diesen Bereich feststellt.

Nach einer weiteren Weiterbildung wird von der Ladeplanungseinrichtung der fahrzeugindividuelle Ladeplan ergänzend abhängig von zeitabhängigen Energieentgelten für die Ladestation bestimmt.

Informationen bezüglich zeitabhängiger Energieentgelte bzw. für bestimmte Zeiten geltender Entgelte für den Bezug elektrischer Energie von der mit der Ladestation verbundenen Energieversorgungsinfrastruktur können der Ladeplanungseinrichtung beispielsweise von einer weiteren Einrichtung des Flottenverwaltungssystems oder auch von dem Betreiber der Energieversorgungsinfrastruktur selbst übermittelt werden. Die Berücksichtigung dieser Informationen ermöglicht beispielsweise eine Planung der Zeiträume der Ladepläne mit dem Ziel eines zumindest vorwiegenden Ladens während Zeiten niedriger Entgelte, wodurch die in Verbindung mit dem Laden stehenden Betriebskosten der Schienenfahrzeuge vorteilhaft verringert werden können.

Das erfindungsgemäße Schienenfahrzeug, welches zumindest ein elektrisches Antriebssystem, einen elektrischen Energiespeicher, eine Kommunikationseinrichtung und eine Steuereinrichtung umfasst, ist dadurch gekennzeichnet, dass die Steuereinrichtung ausgestaltet ist, einen aktuellen Ladezustand des Energiespeichers zu bestimmen, die Kommunikationseinrichtung ausgestaltet ist, zumindest Informationen bezüglich einer Identifikation und des bestimmten Ladezustands zu einer einer Ladestation zugeordneten zentralen Ladeplanungseinrichtung zu übertragen und von der Ladeplanungseinrichtung einen Ladeplan zu empfangen, welcher von der Ladeplanungseinrichtung zumindest abhängig von einer maximalen Gesamt-Ladeleistung der Ladestation, einem dem Schienenfahrzeug zugeordneten Umlaufplan und einem Ziel-Ladezustand bestimmt wurde, und dass die Steuereinrichtung ferner ausgestaltet ist, das Laden des Energiespeichers abhängig von dem empfangenen Ladeplan an der Ladestation zu steuern.

Die erfindungsgemäße Ladeplanungseinrichtung zum Steuern eines Ladens elektrischer Energiespeicher von Schienenfahrzeugen an einer der Ladeplanungseinrichtung zugeordneten Ladestation, wobei die Ladestation ausgestaltet ist, dass an ihr mehrere Schienenfahrzeuge parallel ladbar sind, ist dadurch gekennzeichnet, dass die Ladeplanungseinrichtung ausgestaltet ist, von einem Schienenfahrzeug zumindest Informationen bezüglich einer Identifikation und eines bestimmten aktuellen Ladezustands zu empfangen, zumindest abhängig von einer maximalen GesamtLadeleistung der Ladestation, einem dem Schienenfahrzeug zugeordneten Umlaufplan und einem Ziel-Ladezustand einen fahrzeugindividuellen Ladeplan zu bestimmen, und den bestimmten Ladeplan zu dem Schienenfahrzeug zu übertragen.

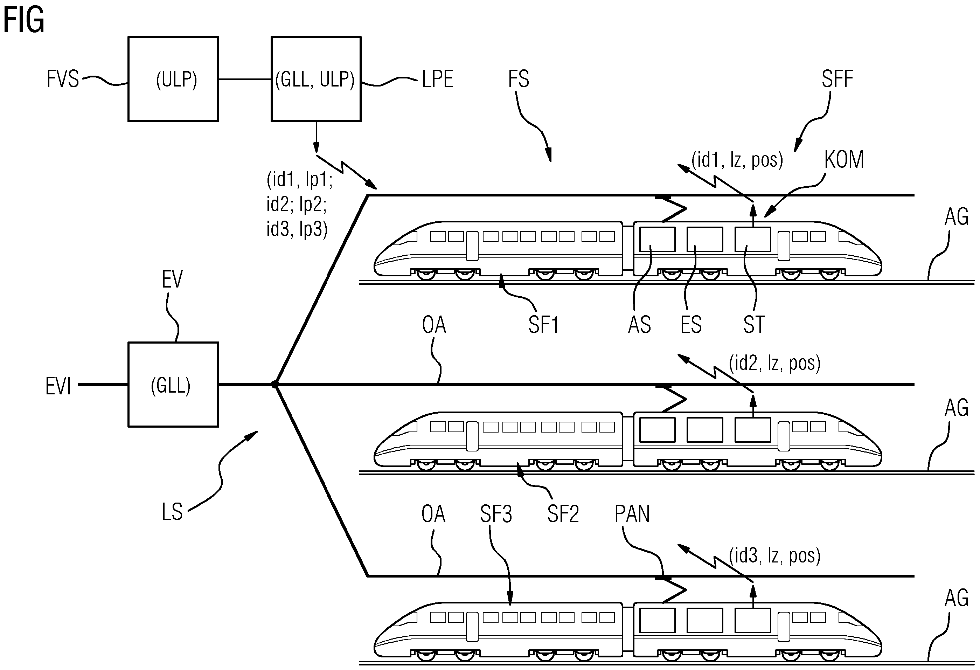

Die Erfindung wird nachfolgend anhand eines Ausführungsbeispiels erläutert. Dabei zeigt die Figur mehrere mit einer Ladestation verbundene Schienenfahrzeuge sowie deren Kommunikation mit einer zentralen Ladeplanungseinrichtung.

Nach dem Ausführungsbeispiel der Figur befinden sich drei beispielhafte Schienenfahrzeuge SF1, SF2, SF3 einer Schienenfahrzeugflotte SFF im Bereich einer Ladestation LS. Beispielhaft ist die Ladestation an einem Depot mit einer Mehrzahl von Abstellgleisen AG angeordnet. Die Ladestation LS umfasst eine Energieversorgung EV, welche mit einer Energieversorgungsinfrastruktur EVI verbunden ist und eine bestimmte maximale Gesamtladeleistung GLL bereitstellen kann. Die Energieversorgung EV der Ladestation LS speist beispielhaft drei Oberleitungsabschnitte OA, mit welchen Stromabnehmer PAN der Schienenfahrzeuge SF1, SF2, SF3 elektrisch verbunden sind. Steuereinrichtungen ST in den Schienenfahrzeugen SF1, SF2, SF3 steuern jeweils das Laden eines Energiespeichers ES, welcher mit einem Antriebssystem AS des Schienenfahrzeugs SF1, SF2, SF3 verbunden ist auf Basis eines individuellen Ladeplans lp1, lp2, lp3. Die Steuereinrichtungen ST sind mittels Kommunikationseinrichtungen KOM über eine Funkschnittstelle FS mit einer zentralen Ladeplanungseinrichtung LPE verbunden.

Jedes Schienenfahrzeug SF1, SF2, SF3 bestimmt, insbesondere periodisch, seine aktuelle Position pos sowie einen aktuellen Ladezustand lz seines Energiespeichers ES, insbesondere der einen oder mehreren Antriebsbatterien, welche zumindest einer Speisung eines Antriebssystems AS des Schienenfahrzeugs SF1, SF2, SF3 dienen. Die bestimmte Position pos, den bestimmten Ladezustand lz sowie eine Identifikationskennung id1, id2, id3 überträgt das Schienenfahrzeug, ebenso periodisch, zu der zentralen Ladeplanungseinrichtung LPE bzw. zu einem mit dieser verbundenen zentralen Flottenverwaltungssystem FVS.

Auf Seiten der Ladeplanungseinrichtung LPE werden die empfangenen Informationen verarbeitet und insbesondere geprüft, ob sich das jeweilige Schienenfahrzeug SF1, SF2, SF3 im Bereich der bzw. einer Ladestation LS befindet. Sofern die Ladeplanungseinrichtung LPE dies bestätigt, bestimmt sie für alle im Bereich der Ladestation LS bestätigten bzw. mit dieser verbundenen Schienenfahrzeuge SF1, SF2, SF3 einen jeweiligen Ladeplan lp1, lp1, lp3, und überträgt diese zusammen mit den Identifikationskennungen id1, id2, id3 zu den Schienenfahrzeugen SF1, SF2, SF3. Der jeweilige Ladeplan lp1, lp2, lp3 berücksichtigt dabei insbesondere den Umlaufplan ULP des jeweiligen Schienenfahrzeugs, SF1, SF2, SF3, welcher von dem Flottenverwaltungssystem FVS zur Verfügung gestellt wird. Auf Seiten des jeweiligen Schienenfahrzeugs SF1, SF2, SF3 wird der empfangene Ladeplan lp1, lp2, lp3 von der Steuereinrichtung ST entsprechend umgesetzt. Beispielsweise steuert die Steuereinrichtung ST des jeweiligen Schienenfahrzeugs SF1, SF2, SF3 ein Ladegerät entsprechend derart an, dass dieses den Energiespeicher ES entsprechend dem Ladeplan lädt.

Die Ladepläne lp1, lp2, lp3 definieren für jedes Schienenfahrzeug SF1, SF2, SF3 einen speziellen Zeitraum, in welchem dieses mit einer ebenfalls definierten maximalen Ladeleistung den Energiespeicher ES laden kann, sowie eine verringerte Ladeleistung, welche während der verbleibenden Zeit der Energiespeicher ES geladen werden bzw. das Schienenfahrzeug SF1, SF2, SF3 betrieben werden kann.

Der jeweilige Zeitraum kann dabei entsprechend einer Priorisierung der Schienenfahrzeuge SF1, SF2, SF3 erfolgen. Beispielsweise wird dem Schienenfahrzeug SF1, SF2, SF3 mit dem höchsten Ladezustand ein erster Zeitraum zugewiesen, dem Schienenfahrzeug SF1, SF2, SF3 mit einem nächstniedrigen Ladezustand ein nachfolgender zweiter Zeitraum usw. Hierdurch wird erreicht, dass eine Anzahl Schienenfahrzeuge innerhalb eines begrenzten Zeitraums, zumindest bezüglich des Ladezustands lz der Energiespeicher ES, betriebsbereit sind. Die Zeiträume können ebenfalls derart bemessen sein, dass die Energiespeicher ES aller mit der Ladestation LS verbundener Schienenfahrzeuge SF1, SF2, SF3 innerhalb dieser Zeiträume jeweils auf einen bestimmten minimalen Ladezustand geladen werden. Dieser minimale Ladezustand ist dabei beispielsweise derart bemessen, dass das jeweilige Schienenfahrzeug SF1, SF2, SF3 bereits mit diesem den Betrieb entsprechend seinem Umlaufplan ULP beginnen bzw. fortsetzen kann. Sofern nach Erreichen dieses minimalen Ladezustands lz noch Zeit bis zum Betriebsbeginn eines oder mehrerer Schienenfahrzeuge SF1, SF2, SF3 verbleibt, kann die Ladeleistung der Ladestation LS von der Ladeplanungseinrichtung LPE beispielsweise gleichmäßig auf die verbundenen Schienenfahrzeuge SF1, SF2, SF3 verteilt werden, was wiederum mittels entsprechender Ladepläne lp1, lp2, lp3 zu den Schienenfahrzeugen SF1, SF2, SF3 übertragen wird.

Bei der Wahl der Zeiträume kann weiterhin eine Tarifstruktur der die Ladestation LS versorgenden Energieversorgungsinfrastruktur EVI berücksichtigt werden, wobei von der Ladeplanungseinrichtung LPE beispielsweise bevorzugt Zeiträume mit niedrigen Entgelten gewählt werden.

Die in den Ladeplänen lp1, lp2, lp3 jeweils definierte maximale Ladeleistung wird von der Ladeplanungseinrichtung LPE beispielsweise derart bemessen, dass eine von der Ladestation LS bereitstellbare maximale Gesamt-Ladeleistung GLL nicht überschritten wird, wobei sie die verringerte Ladeleistung der weiteren Schienenfahrzeuge SF1, SF2, SF3 entsprechend berücksichtigt.

Für die Bestimmung der Ladepläne lp1, lp2, lp3 kann die Ladeplanungseinrichtung LPE beispielsweise ergänzend mit der Energieversorgung EW der Ladestation LS über eine geeignete Kommunikationsschnittstelle verbunden sein, sodass für den Fall, dass sich die bereitstellbare Gesamtladeleistung GLL der Energieversorgung EV verändert, beispielsweise verringert, dies von der Ladeplanungseinrichtung LPE berücksichtigt werden kann.

## Patentansprüche

1. Verfahren zum Steuern eines Ladens elektrischer Energiespeicher (ES) von Schienenfahrzeugen (SF1 SF2, SF3) an einer Ladestation (LS), wobei die Ladestation (LS) ausgestaltet ist, dass an ihr mehrere Schienenfahrzeuge (SF1 SF2, SF3) parallel ladbar sind,
**dadurch gekennzeichnet, dass**
- von dem Schienenfahrzeug (SF1 SF2, SF3) zumindest ein aktueller Ladezustand (lz) des Energiespeichers (ES= bestimmt wird,
- von dem Schienenfahrzeug (SF1 SF2, SF3) zumindest Informationen bezüglich einer Identifikation (id1, id2, id3) und des bestimmten Ladezustands (lz) zu einer der Ladestation (LS) zugeordneten zentralen Ladeplanungseinrichtung (LPE) übertragen werden,
- von der Ladeplanungseinrichtung (LPE) zumindest abhängig von einer maximalen Gesamt-Ladeleistung (GLL) der Ladestation (LS), einem dem Schienenfahrzeug (SF1 SF2, SF3) zugeordneten Umlaufplan (ULP) und einem Ziel-Ladezustand ein fahrzeugindividueller Ladeplan (lp1, lp2, lp3) bestimmt und zu dem Schienenfahrzeug (SF1 SF2, SF3) übertragen wird, und
- von dem Schienenfahrzeug (SF1 SF2, SF3) der Energiespeicher (ES) abhängig von dem empfangenen Ladeplan (lp1, lp2, lp3) an der Ladestation (LS) geladen wird.

2. Verfahren nach Anspruch 1, **dadurch gekennzeichnet, dass** von der Ladeplanungseinrichtung (LPE) mittels des Ladeplans (lp1, lp2, lp3) zumindest ein Zeitraum und eine während des Zeitraums zugelassene maximale Ladeleistung bestimmt wird.

3. Verfahren nach Anspruch 1 oder 2, **dadurch gekennzeichnet, dass**
von dem Schienenfahrzeug (SF1 SF2, SF3) ergänzend eine aktuelle Position (pos) bestimmt wird und Informationen bezüglich der bestimmten aktuellen Position (pos) zu der Ladeplanungseinrichtung (LPE) übertragen werden, und/oder von dem Schienenfahrzeug (SF1 SF2, SF3) und/oder der Ladeplanungseinrichtung (LPE) mittels der aktuellen Position (pos) bestimmt wird, ob sich das Schienenfahrzeug (SF1 SF2, SF3) in einem geographischen Bereich der Ladestation (LS) befindet.

4. Verfahren nach einem der vorstehenden Ansprüche, **dadurch gekennzeichnet, dass**
von der Ladeplanungseinrichtung (LPE) der fahrzeugindividuelle Ladeplan (lp1, lp2, lp3) ergänzend abhängig von zeitabhängigen Energieentgelten für die Ladestation (LS) bestimmt wird.

5. Schienenfahrzeug (SF1 SF2, SF3), umfassend zumindest ein elektrisches Antriebssystem (AS), einen elektrischen Energiespeicher (ES), eine Kommunikationseinrichtung (KOM) und eine Steuereinrichtung (ST),
**dadurch gekennzeichnet, dass**
- die Steuereinrichtung (ST) ausgestaltet ist, einen aktuellen Ladezustand (lz) des Energiespeichers (ES) zu bestimmen,
- die Kommunikationseinrichtung (KOM) ausgestaltet ist, zumindest Informationen bezüglich einer Identifikation (id1, id2, id3) und des bestimmten Ladezustands (lz) zu einer einer Ladestation (LS) zugeordneten zentralen Ladeplanungseinrichtung (LPE) zu übertragen und von der Ladeplanungseinrichtung (LPE) einen Ladeplan (lp1, lp2, lp3) zu empfangen, welcher von der Ladeplanungseinrichtung (LPE) zumindest abhängig von einer maximalen Gesamt-Ladeleistung (GLL) der Ladestation (LS), einem dem Schienenfahrzeug (SF1 SF2, SF3) zugeordneten Umlaufplan (ULP) und einem Ziel-Ladezustand bestimmt wurde, und
- die Steuereinrichtung (ST) ferner ausgestaltet ist, das Laden des Energiespeichers (ES) abhängig von dem empfangenen Ladeplan (lp1, lp2, lp3) an der Ladestation (LS) zu steuern.

6. Ladeplanungseinrichtung (LPE) zum Steuern eines Ladens elektrischer Energiespeicher (ES) von Schienenfahrzeugen (SF1 SF2, SF3) an einer der Ladeplanungseinrichtung (LPE) zugeordneten Ladestation (LS), wobei die Ladestation (LS) ausgestaltet ist, dass an ihr mehrere Schienenfahrzeuge (SF1 SF2, SF3) parallel ladbar sind,
**dadurch gekennzeichnet, dass**
die Ladeplanungseinrichtung (LPE) ausgestaltet ist, von einem Schienenfahrzeug (SF1 SF2, SF3) zumindest Informationen bezüglich einer Identifikation (id1, id2, id3) und eines bestimmten aktuellen Ladezustands (lz) zu empfangen, zumindest abhängig von einer maximalen Gesamt-Ladeleistung (GLL) der Ladestation (LS), einem dem Schienenfahrzeug (SF1 SF2, SF3) zugeordneten Umlaufplan (ULP) und einem Ziel-Ladezustand einen fahrzeugindividuellen Ladeplan (lp1, lp2, lp3) zu bestimmen, und den bestimmten Ladeplan (lp1, lp2,lp3) zu dem Schienenfahrzeug (SF1 SF2, SF3) zu übertragen.
